Europäisches Patentamt

**European Patent Office**

Office européen des brevets

(19)

(11) Veröffentlichungsnummer: **0 052 239**

**A1**

(12) **EUROPÄISCHE PATENTANMELDUNG**

(21) Anmeldenummer: **81108406.0**

(22) Anmeldetag: **16.10.81**

(51) Int. Cl.³: **B 60 N 3/16**

(30) Priorität: **11.11.80 DE 3042480**

(43) Veröffentlichungstag der Anmeldung:
**26.05.82 Patentblatt 82/21**

(84) Benannte Vertragsstaaten:
**AT BE CH DE FR GB LI NL SE**

(71) Anmelder: **HKS-Vertriebs-GbmH & Co. KG Hunfeld & Kowalski**
**Berssener Strasse 25**
**D-4475 Sögel(DE)**

(72) Erfinder: **Kötter, Theo**
**Alte Poststrasse 6**
**D-4475 Sögel(DE)**

(74) Vertreter: **Jabbusch, Wolfgang, Dr.**
**Elisabethstrasse 6**
**D-2900 Oldenburg(DE)**

(54) Vorrichtung zum Wärmen von Speisen und anderen Lebensmitteln, insbesondere in Kraftfahrzeugen, wie Autobussen.

(57) Doppelwandiger Lebensmittelaufnahmebehälter (1,4) dessen zwischen den Wandungen befindliche Hohlräume (6) an dem Kühlwasserkreislauf des Fahrzeugmotors angeschlossen sind.

EP 0 052 239 A1

HKS-Vertriebs-GmbH & Co. KG, Hunfeld & Kowalski, Berßener Str. 25
4475 Sögel

Vorrichtung zum Wärmen von Speisen und anderen Lebensmitteln,
insbesondere in Kraftfahrzeugen, wie Autobussen

Die Erfindung betrifft eine Vorrichtung zum Wärmen von Speisen und anderen Lebensmitteln, insbesondere in Kraftfahrzeugen, wie Autobussen.

Es ist bekannt, sogenannte Wärmeöfen zum Wärmen von Lebensmitteln an Bord von Kraftfahrzeugen, insbesondere in Autobussen, elektrisch zu beheizen. Zur Bereitstellung der dafür benötigten elektrischen Energie muß die Lichtmaschine des Kraftfahrzeuges stärker dimensioniert werden, was zusätzliche Kosten verursacht. Außerdem geht die für den Antrieb der stärkeren Lichtmaschine benötigte Energie den Radantrieben des Fahrzeuges verloren, was den Nachteil ergibt, daß ein höherer Brennstoffverbrauch für den Fahrbetrieb entsteht.

Der Erfindung liegt die Aufgabe zugrunde, eine andere vom elektrischten Bordnetz des Kraftfahrzeuges unabhängige Wärmequelle für das Wärmen von Speisen und anderen Lebensmitteln einzusetzen.

Diese Aufgabe ist erfindungsgemäß gelöst worden durch die Verwendung des Kühlwasser des Fahrzeugmotors als Wärmeträger.

Bei dieser erfindungsgemäßen Lösung wird eine Vorrichtung zum Wärmen von Lebensmitteln an den Kühlwasserkreislauf des Antriebsmotors des Kraftfahrzeuges angeschlossen. Das Aufwärmen von Lebensmitteln ist dadurch unabhängig vom elektrischen Stromnetz des Kraftfahrzeuges, wodurch der vom Antriebsmotor anzutreibende Generator nicht größer dimensioniert zu werden braucht. Ein weiter Vorteil ist darin zu sehen, daß die Vorrichtung zum Wärmen von Lebensmitteln einen zusätzlichen Wärmetauscher im Kühlwasserkreislauf darstellt, durch den der eigent-

- 2 -

liche Motorkühler in seiner Wirkung unterstützt wird. Der Motorkühler kann bei entsprechender Auslegung der Vorrichtung zum Wärmen von Lebensmitteln ohne ein relativ viel Antriebsenergie verzehrendes Lüfterrad auskommen, was somit noch zu einer Kraftstoffersparnis während des Fahrbetriebs führt.

Da das Kühlwasser normalerweise eine konstant gehaltene Temperatur von etwa $85^{o}$ C aufweist, können damit Warmhaltefächer, Würstchensieder und dergleichen an Bord von Kraftfahrzeugen, wie Autobussen, eingesetzte Wärmevorrichtungen betrieben werden. Es ist auch möglich, in Bordwaschräumen warmes Wasser zur Verfügung zu stellen.

Bei einer bevorzugten Ausführung zeichnet sich die Vorrichtung aus durch doppelwandige Lebensmittelaufnahmebehälter, deren zwischen den Wandungen befindliche Hohlräume an den Kühlwasserkreislauf des Fahrzeugmotors angeschlossen sind. Die Innenbehälter werden somit fortlaufend von heißem Kühlwasser umspült. Ohne irgendeinen zusätzlichen Energieaufwand lassen sich somit Speisen und Getränke erwärmen oder warmhalten.

Eine weitere Ausbildung der Erfindung zeichnet sich dadurch aus, daß der doppelwandige Lebensmittel-Aufnahmebehälter seitlich und unten mit einer wärmedämmenden Isoliermaterialschicht umkleidet ist, die von einem Außenmantel umschlossen ist, und daß die gesamte Vorrichtung durch mindestens einen mit Isoliermaterial ausgerüsteten Deckel verschließbar ist.

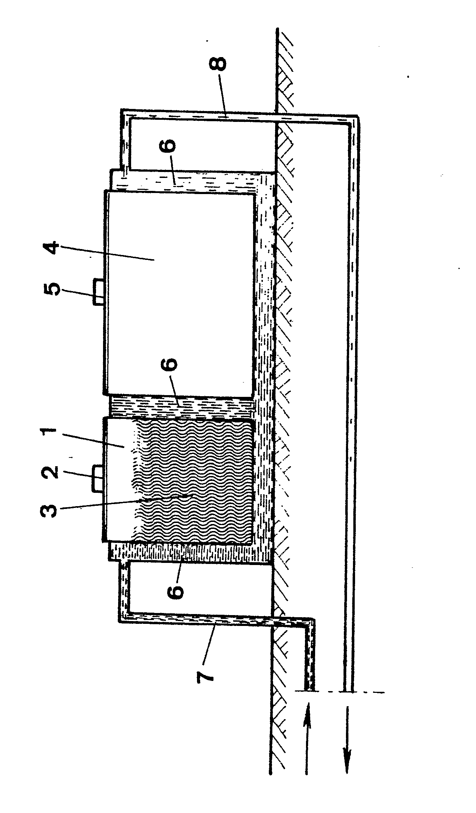

Ein Ausführungsbeispiel der Erfindung, aus dem sich weitere erfinderische Merkmale ergeben, ist in der Zeichnung dargestellt.

Die Zeichnung zeigt einen schematischen Längsschnitt durch eine Vorrichtung zum Wärmen von Lebensmitteln an Bord von Autobussen. Die Vorrichtung hat einen Würstchensieder 1 mit Deckel 2 und Wasserinhalt 3. Daneben befindet sich ein größerer Wärmebehälter 4, z.B. eine Warmhaltebox, der mit einem Deckel 5 verschlossen ist.

Die Wandungen dieser Lebensmittel-Aufnahmebehälter 1 und 4 sind doppelt ausgeführt, so daß Hohlräume 6 gebildet sind. An die Hohlräume 6 sind ein Zulauf 7 und ein Rücklauf 8 in Form von Rohrleitungen angeschlossen, die mit dem Kühlwasserkreislauf des Kraftfahrzeugmotors verbunden sind.

Die doppelwandigen Lebensmittel-Aufnahmebehälter 1 und 4 sind vorzugsweise seitlich und unten mit einer wärmedämmenden Isoliermaterialschicht umkleidet, die von einem Außenmantel umschlossen ist. Die einzelnen Lebensmittel-Aufnahmebehälter oder die ganze Vorrichtung ist durch mindestens einen auch mit Isoliermaterial ausgerüsteten Deckel verschließbar.

Die Vorrichtung kann mit besonderem Vorteil in Autobussen oder in Lastkraftwagen verwendet werden. Sie ist gleichermaßen gut geeignet zur Verwendung in Personenkraftwagen und beispielsweise auch in Wasserkraftfahrzeugen, wie Motorbooten.

Ansprüche:

1. Vorrichtung zum Wärmen von Speisen und anderen Lebensmitteln, insbesondere in Kraftfahrzeugen, wie Autobussen g e k e n n z e i c h n e t   d u r c h die Verwendung des Kühlwassers des Fahrzeugmotors als Wärmeträger.

2. Vorrichtung nach Anspruch 1, dadurch gekennzeichnet, daß sie mindestens einen doppelwandigen Lebensmittel-Aufnahmebehälter (1,4) aufweist, dessen zwischen den Wandungen befindliche Hohlräume (6) an den Kühlwasserkreislauf des Fahrzeugmotors angeschlossen sind.

3. Vorrichtung nach Anspruch 2, dadurch gekennzeichnet, daß der doppelwandige Lebensmittel-Aufnahmebehälter (1,4) seitlich und unten mit einer wärmedämmenden Isoliermaterialschicht umkleidet ist, die von einem Außenmantel umschlossen ist, und daß die gesamte Vorrichtung durch mindestens einen mit Isoliermaterial ausgerüsteten Deckel verschließbar ist.

8230

0052239

1/1

Europäisches
Patentamt

**EUROPÄISCHER RECHERCHENBERICHT**

Nummer der Anmeldung

EP 81 10 8406

## EINSCHLÄGIGE DOKUMENTE

| Kategorie | Kennzeichnung des Dokuments mit Angabe, soweit erforderlich, der maßgeblichen Teile | betrifft Anspruch |
|-----------|-----------------------------------------------------------------------------------|-------------------|
| X | US - A - 3 809 059 (BURK)<br>* Insgesamt * | 1-3 |
| X | DE - B - 1 236 956 (RABENBERG)<br>* Insgesamt * | 1 |
| X | FR - A - 1 139 886 (DANTI)<br>* Insgesamt * | 1,2 |
| X | US - A - 4 162 670 (HAYS)<br>* Insgesamt * | 1 |
| X | DE - A - 2 528 461 (RICHTER)<br>* Insgesamt * | 1 |

**KLASSIFIKATION DER ANMELDUNG (Int Cl.¹)**

B 60 N 3/16

**RECHERCHIERTE SACHGEBIETE (Int Cl.¹)**

B 60 N 3/16
3/10

**KATEGORIE DER GENANNTEN DOKUMENTE**

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---------------|-----------------------------|--------|
| Den Haag | 05-02-1982 | SCHMITTER |

EPA form 1503.1  06.78